# EUROPÄISCHE PATENTSCHRIFT

(11) **EP 1 327 645 B1**
(45) Veröffentlichungstag und Bekanntmachung des Hinweises auf die Patenterteilung: **21.10.2009**
(21) Anmeldenummer: 02028036.8
(22) Anmeldetag: 16.12.2002
(51) Int. Cl.: C08G 61/12

(54) **TEST**
Process for the production of neutral poly(ethylenedioxythiophene) and related poly(ethylenedioxythiophenes)
Procédé de preparation de poly(éthylènedioxythiophène) et poly(éthylènedioxythiophènes) correspondants

(30) Priorität: 27.12.2001 DE 10164260
(43) Veröffentlichungstag der Anmeldung: 16.07.2003
(73) Patentinhaber: H.C. Starck GmbH, 38642 Goslar (DE)
(72) Erfinder: Reuter, Knud, Dr., 47800 Krefeld (DE); Kirchmeyer, Stephan, Dr., 51375 Leverkusen (DE)

(56) Entgegenhaltungen:
- EP-A- 0 339 340
- EP-A- 0 440 957

## Beschreibung

Die Erfindung betrifft ein Verfahren zur Herstellung von neutralen Polythiophenen auf Basis von 3,4-Alkylendioxythiophenen, insbesondere 3,4-Ethylendioxythiophen (auch 2,3-Dihydrothieno[3,4-b][1,4]dioxin), in organischen Lösemitteln lösliche, neutrale Polythiophene und deren Verwendung.

Die Verbindungsklasse der π-konjugierten Polymere war in den letzten Jahrzehnten Gegenstand zahlreicher Veröffentlichungen. Sie werden auch als leitfähige Polymere oder als synthetische Metalle bezeichnet.

Wegen der erheblichen Delokalisierung der π-Elektronen entlang der Hauptkette zeigen diese Polymere interessante (nichtlineare) optische Eigenschaften, und nach Oxidation oder Reduktion stellen sie gute elektrische Leiter dar. Dadurch können diese Verbindungen in verschiedenen praktischen Anwendungsgebieten eingesetzt werden, wie z.B. in der Datenspeicherung, der optischen Signalverarbeitung, der Unterdrückung elektromagnetischer Störungen (EMI) und der Sonnenenergieumwandlung, sowie in wiederaufladbaren Batterien, lichtemittierenden Dioden, Feldeffekttransistoren, Leiterplatten, Sensoren, Kondensatoren und antistatischen Materialien.

Beispiele für bekannte π-konjugierte Polymere sind Polypyrrole, Polythiophene, Polyaniline, Polyacetylene, Polyphenylene und Poly(p-phenylen-vinylene).

Ein besonders wichtiges und technisch genutztes Polythiophen ist das Poly(ethylen-3,4-dioxythiophen), das in seiner dotierten Form sehr hohe Leitfähigkeiten aufweist, siehe z.B. EP 339 340 A2. Die Herstellung des dotierten Poly(ethylen-3,4-dioxythiophen)s erfolgt gemäß EP 339 340 A2 durch oxidative Polymerisation aus 3,4-Ethylendioxythiophen. Die Verarbeitbarkeit des Produktes wird z.B. durch die Verwendung von Poly(styrolsulfonat) als Gegenion in wässriger Dispersion erreicht.

Demgegenüber werden durch Elektropolymerisation ebenfalls hochleitfähige, jedoch nicht verarbeitbare Produkte, z.B. in Form von Beschichtungen erhalten (z.B. "Q. Pei, G. Zuccarello, M. Ahlskog und O. Inganäs, Polymer 35 (1994), S. 1347 - 1351").

Gemäß "T. Yamamoto & M. Abla, Synth. Met. 100 (1999), S. 237 - 239" ist es nicht möglich, die Dotierung eines gemäß EP 339 340 A2 hergestellten oder auf ähnliche Weise durch oxidative Polymerisation hergestellten dotierten Poly(ethylen-3,4-dioxythiophen)s vollständig rückgängig zu machen und so ein neutrales und somit undotiertes Poly(ethylen-3,4-dioxythiophen) herzustellen. Unter Dotierung ist gemäß Yamamoto Oxidation und somit Erzeugung von positiv geladenem Poly(ethylen-3,4-dioxythiophen) zu verstehen.

Gemäß "S. Garreau, G. Louarn, J. P. Buisson, G. Froyer, S. Lefrant, Macromolecules 32, (1999) S. 6807 - 6812" ist es ebensowenig möglich, das elektrochemisch erzeugte dotierte Poly(ethylen-3,4-dioxythiophen) auf elektrochemischem Wege vollständig zu entdotieren.

Daher wurde neutrales Poly(ethylen-3,4-dioxythiophen) bisher stets durch so genannte reduktive, metallorganische Synthese aus 2,5-Dihalogen-ethylen-3,4-dioxythiophen hergestellt. Aus "Synth. Met. 100 (1999), S. 237 - 239" und "Polymer 43 (2002), S. 711-719" ist ein Verfahren zur Herstellung von neutralem, undotiertem Poly(ethylen-3,4-dioxythiophen) durch Dehalogenierungs-Polykondensation von 2,5-Dichlor-ethylen-3,4-dioxythiophen in Gegenwart von Bis(1,5-Cyclooctadien)nickel(0) bekannt. Nach diesem Verfahren lässt sich allerdings nur ein unlösliches Poly(ethylen-3,4-dioxythiophen) erhalten.

"J. Mater. Chem. 11, (2001) S. 1378 - 1382" beschreibt die Herstellung eines löslichen, neutralen, undotierten Poly(ethylen-3,4-dioxythiophen)s durch Polykondensation von 2,5-Dibrom-ethylen-3,4-dioxythiophen in Gegenwart von in situ hergestelltem Ni(0). Herstellungsbedingt enthält ein solchermaßen synthetisiertes Material jedoch organisch gebundenes Brom. Wegen der Gefahr von HBr- bzw. Bromid-Abspaltung sind solche chemisch nicht inerten Endgruppen am Polymeren bei Anwendungen in der Elektronikindustrie unerwünscht. Außerdem wurde auch dieses Produkt als nur teilweise in Dimethylacetamid löslich beschrieben.

Darüber hinaus sind die in "Synth. Met. 100 (1999), S. 237 - 239", "J. Mater. Chem. 11, (2001) S. 1378 - 1382" und "Synth. Met. 119 (2001), S. 381-382" beschriebenen Verfahren wegen des zusätzlichen Syntheseschritts über das 2,5-Dihalogenethylen-3,4-dioxythiophen und der Verwendung teurer, empfindlicher metallorganischer Reagenzien nicht wirtschaftlich, verglichen mit einfachen oxidativen Polymerisationsverfahren.

Eine Möglichkeit, durch oxidative Polymerisation zu in organischen Lösemitteln löslichen, neutralen und undotierten Derivaten des Poly-(ethylen-3,4-dioxythiophen)s zu gelangen, besteht in einer Substitution der Ethylen-Einheit mit Alkyl- oder Alkoxymethyl-Gruppen mit 10 oder mehr C-Atomen. Entsprechend substituierte Poly-(ethylen-3,4-dioxythiophen)e sind in "Adv. Mater. 12, (2000) S. 481 - 494", "Polym. Mater. Sci. Eng. 72, (1995) S. 319 ff.", "Macromolecules 30, (1997) S. 2582 ff.", "Macromolecules 29, (1996) S. 7629 ff.", "Chem. Mater. 10, (1998) S. 896 ff.", "Synth. Met. 102, (1999) S. 967 ff.", "J. Chim. Phys. 95, (1998) S. 1258 ff.", "Synth. Met. 101, (1999) S. 7 - 8" und "Chem. Mater. 8, (1996) S. 769 - 776" beschrieben. Allen genannten Arbeiten ist es gemeinsam, dass nur dann in organischen Lösemitteln lösliche, neutrale und somit undotierte Derivate des Poly-(ethylen-3,4-dioxythiophen)s erhalten werden, wenn die Substituenten an der Ethylen-Einheit des 3,4-Ethylendioxythiophens mindestens 10 Kohlenstoffatome aufweisen.

Aus "Polymer 42 (2001), S. 7229 - 7232" ist ein neutrales, undotiertes Polymer aus 2-n-Hexyl-2,3-dihydrothieno[3,4-b][1,4]dioxin-Einheiten beschrieben. Die Herstellung erfolgt jedoch über die in "Synth. Met. 100 (1999), S. 237 - 239" beschriebene aufwändige Synthesemethode durch Polykondensation des 2,5-Dichlorthiophenderivats in Gegenwart von Ni(0); die oxidative Synthese wurde als Herstellmethode dagegen als ungeeignet bezeichnet.

In EP 686 662 A2 ist von einem neutralen Poly(ethylen-3,4-dioxythiophen) die Rede. Die Polymerisation wird allerdings entsprechend EP 339 340 A2 und EP 440 957 A2 durchgeführt. Auf diese Weise wird jedoch dotiertes, nicht neutrales Poly(ethylen-3,4-dioxythiophen) hergestellt. Auch ein Vergleich der Eigenschaften von gemäß EP 686 662 A2 hergestelltem Poly(ethylen-3,4-dioxythiophen) mit den Eigenschaften zweifelsfrei undotierten, neutralen Poly(ethylen-3,4-dioxythiophen)s, das nach "Synth. Met. 100 (1999), S. 237 - 239" oder "J. Mater. Chem. 11, (2001) S. 1378-1382" hergestellt wird, belegt, dass in EP 686 662 A2 keinesfalls neutrales Poly(ethylen-3,4-dioxythiophen) beschrieben wird.

Es ist bisher kein Verfahren bekannt, um auf oxidativem Wege neutrales und somit undotiertes Poly(ethylen-3,4-dioxythiophen) oder Derivate, die an der Ethylen-Einheit einen C₁-C₉-Alkylsubstituenten tragen, herzustellen.

Ebensowenig ist es bisher möglich, ein vollständig halogenfreies und zugleich in organischen Lösemitteln lösliches Poly(ethylen-3,4-dioxythiophen) herzustellen.

Aufgabe der vorliegenden Erfindung ist es nun, auf preiswerte und einfache Weise in organischen Lösemitteln lösliches, von organisch gebundenem Halogen freies, neutrales Poly(ethylen-3,4-dioxythiophen) bzw. kurzkettig substituierte, bisher in neutraler und in organischen Lösemitteln gelöster Form unbekannte Poly(ethylen-3,4-dioxythiophen)-Derivate herzustellen. 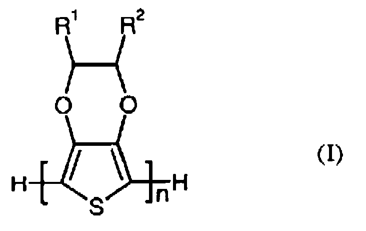 worin
- R¹ und R²: unabhängig voneinander jeweils für H oder C₁ bis C₉-Alkyl stehen, wobei für den Fall, dass R¹ für H steht R² auch CH₂-O-R³ sein kann, mit R³ = H oder C₁ bis C₉-Alkyl, Cycloalkyl oder Aralkyl, und
- n: für eine ganze Zahl von 2 bis 200 steht,
durch Umsetzung von Monomeren der allgemeinen Formel (II), 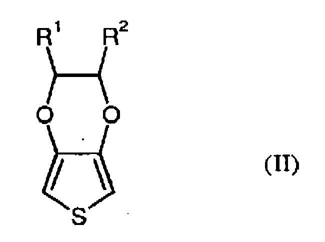 worin
R¹ und R² die oben genannte Bedeutung haben,
mit einem Oxidationsmittel, wobei die Umsetzung in einem organische Lösemittel erfolgt und das Oxidationsmittel in einer Menge von 50 bis 99,9 % der stöchiometrisch erforderlichen Menge eingesetzt wird und in der Reaktionsmischung die Reaktionspartner stets in solchen Mengen vorliegen, dass es nie zum Vorliegen eines Überschusses an Oxidationsmittel von größer als 1,998:1, bezogen auf das im Reaktionsgemisch vorliegende Monomer, kommt.

Die erfindungsgemäßen neutralen Verbindungen werden auch als neutrale, undotierte Verbindungen bezeichnet.

Vorzugsweise handelt es sich bei R¹ und R² unabhängig voneinander jeweils für H oder C₁ bis C₅-Alkyl, wobei für den Fall, dass R¹ für H steht, R² auch CH₂-O-R³ mit R³ = H oder C₁ bis C₅-Alkyl bedeuten kann. Besonders bevorzugt stehen R¹ und R² unabhängig voneinander jeweils für H oder C₁ bis C₂-Alkyl, wobei für den Fall, dass R¹ für H steht, R² auch CH₂-O-R³ mit R³ = H oder C₁ bis C₄-Alkyl bedeuten kann. Insbesondere bevorzugt stehen R¹ und R² für H.

Die erfindungsgemäße Umsetzung wird in einem organischen Lösemittel durchgeführt. Bevorzugt wird ein organisches aprotisches Lösemittel verwendet, insbesondere ein halogenierter Kohlenwasserstoff. Ganz besonders bevorzugt wird ein halogenierter Kohlenwasserstoff aus der Gruppe Chloroform, Methylenchlorid oder Chlorbenzol verwendet.

Als Oxidationsmittel können die für die oxidative Polymerisation von Thiophenen üblichen und dem Fachmann bekannten Oxidationsmittel eingesetzt werden, wobei sich in Abhängigkeit von den gewählten Reaktionsbedingungen und insbesondere vom gewählten organischen Lösemittel gewisse Einschränkungen ergeben können. Geeignete Oxidationsmittel können für gegebene Reaktionsbedingungen leicht mittels einfacher Vorversuche ermittelt werden.

Vorzugsweise wird als Oxidationsmittel eine Eisen-III-Verbindung eingesetzt, besonders bevorzugt Eisen-III-chlorid oder Eisen-III-tosylat, insbesondere bevorzugt Eisen-III-chlorid.

Ein wesentliches Merkmal des erfindungsgemäßen Verfahrens ist die Tatsache, dass das Oxidationsmittel im Unterschuss, d.h. in einer Menge von 50 bis 99,9 % der stöchiometrisch erforderlichen Menge eingesetzt wird. Für die Polymerisation eines Thiophen-Monomers sind pro Mol des Monomers theoretisch 2 Äquivalente des Oxidationsmittels erforderlich. Es ist erfindungswesentlich, dass maximal 99,9 %, bevorzugt maximal 99 %, und mindestens 50 %, bevorzugt mindestens 75 % der stöchiometrisch erforderlichen Oxidationsmittel-Menge eingesetzt werden. Besonders bevorzugt werden 80 bis 96 % der stöchiometrisch erforderlichen Menge eingesetzt.

Dementsprechend ist bei der Durchführung des erfindungsgemäßen Verfahrens darauf zu achten, dass in der Reaktionsmischung die Reaktionspartner stets in solchen Mengen vorliegen, dass es nie zum Vorliegen eines Überschusses an Oxidationsmittel von größer als 1,998: 1, bezogen auf das im Reaktionsgemisch vorliegende Monomer, kommt. Somit sind Reaktionsführungen bevorzugt, bei denen das Thiophen-Monomer vorgelegt und das Oxidationsmittel portionsweise oder kontinuierlich zudosiert wird, so dass zu keiner Zeit mehr als maximal 1,998 Mol des Oxidationsmittels pro Mol Monomer neben dem Monomeren vorliegen können. In der Regel wird die Reaktion jedoch so geführt, dass während der gesamten Reaktionszeit das Molverhältnis von Oxidationsmittel zu Monomer deutlich kleiner als 1,998 : 1 ist.

Das erfindungsgemäße Verfahren kann bei Raumtemperatur durchgeführt werden. Es kann jedoch auch sinnvoll sein, bei tieferen Temperaturen, z.B. 0°C, oder bei höheren Temperaturen zu arbeiten, z.B. bei Rückflusstemperatur von Chloroform (ca. 60°C) oder noch höherer Temperatur, was z.B. in Chlorbenzol möglich ist. Bevorzugt wird bei 0 bis 100°C, besonders bevorzugt bei 15 bis 65°C gearbeitet.

Insbesondere, wenn als Oxidationsmittel Eisen-III-tosylat oder Eisen-III-chlorid benutzt wird, kann die Ausbeute an gewünschtem neutralen Polythiophen erhöht werden, wenn während der Umsetzung zur Neutralisation von aus dem Oxidationsmittel gebildeten Säuren (p-Toluolsulfonsäure oder HCl) eine Base in mindestens äquimolaren Mengen zugesetzt wird. Ein solches Vorgehen ist daher bevorzugt. Geeignete Basen sind beispielsweise Ammoniak, Amine oder basische Metalloxide. Bevorzugt werden jedoch Alkali- oder Erdalkalimetallcarbonate, z.B. Natriumcarbonat, Kaliurncarbonat oder Calciumcarbonat benutzt.

Die Reaktion kann unter Luft oder unter Schutzgas, z.B. Stickstoff oder Argon, durchgeführt werden. Zur Steigerung der Ausbeuten ist die Reaktionsführung unter Schutzgas vorteilhaft, jedoch nicht zwingend.

Als Monomere werden im erfindungsgemäßen Verfahren gegebenenfalls an der Ethylen-Einheit substituierte Ethylen-3,4-dioxythiophene der Formel (II) eingesetzt. Nach IUPAC werden solche Verbindungen als 2,3-Dihydrothieno[3,4-b][1,4]dioxine bezeichnet.

Im Folgenden werden beispielhaft geeignete Monomere unter Verwendung der IUPAC-Nomenklatur aufgezählt.

Als geeignete Monomere der Formel (II), wobei R¹ = H und R² = H oder C₁ bis C₉-Alkyl sind, seien beispielhaft genannt:
2,3 -Dihydrothieno[3,4-b][1,4]dioxin, 2-Methyl-2,3-dihydrothieno[3,4-b][1,4]dioxin, 2-Ethyl-2,3-dihydrothieno[3,4-b][1,4]dioxin, 2-n-Propyl-2,3-dihydrothieno[3,4-b]-[1,4]dioxin, 2-n-Butyl-2,3-dihydrothieno[3,4-b][1,4]dioxin, 2-n-Pentyl-2,3-dihydrothieno[3,4-b][1,4]dioxin, 2-n-Hexyl-2,3-dihydrothieno[3,4-b][1,4]dioxin, 2-n-Heptyl-2,3-dihydrothieno[3,4-b][1,4]dioxin, 2-n-Octyl-2,3-dihydrothieno[3,4-b][1,4]dioxin, 2-(2-Ethylhexyl)-2,3-dihydrothieno[3,4-b][1,4]dioxin, 2-Nonyl-2,3-dihydrothieno-[3,4-b][1,4]dioxin.

Bevorzugte Beispiele aus dieser Gruppe sind 2,3-Dihydrothieno[3,4-b][1,4]dioxin, 2-Methyl-2,3-dihydrothieno[3,4-b][1,4]dioxin, 2-Ethyl-2,3-dihydrothieno[3,4-b][1,4]-dioxin, 2-n-Propyl-2,3-dihydrothieno[3,4-b][1,4]dioxin, 2-n-Butyl-2,3-dihydrothieno[3,4-b][1,4]dioxin, 2-n-Pentyl-2,3-dihydrothieno[3,4-b][1,4]dioxin.

Besonders bevorzugte Beispiele aus dieser Gruppe sind 2,3-Dihydrothieno[3,4-b]-[1,4]dioxin, 2-Methyl-2,3-dihydrothieno[3,4-b][1,4]dioxin, 2-Ethyl-2,3-dihydrothieno[3,4-b][1,4]dioxin.

Ganz besonders bevorzugt ist 2,3-Dihydrothieno[3,4-b][1,4]dioxin.

Als geeignete Monomere der Formel (II), wobei R¹ und R² unabhängig voneinander für C₁ bis C₉-Alkyl stehen, seien beispielhaft genannt:
2,3-Dimethyl-2,3-dihydrothieno[3,4-b][1,4]dioxin, 2,3-Diethyl-2,3-dihydrothieno-[3,4-b][1,4]dioxin, 2,3-Di-n-propyl-2,3-dihydrothieno[3,4-b][1,4]dioxin, 2,3-Di-nbutyl-2,3-dihydrothieno[3,4-b][1,4]dioxin.

Als geeignete Monomere der Formel (II), wobei R¹ für H und R² für -CH₂-O-R³ mit R³ = H, C₁-C₉-Alkyl, -Cycloalkyl oder -Aralkyl stehen, seien beispielhaft genannt:
2,3-Dihydrothieno[3,4-b][1,4]dioxin-2-ylmethanol, 2-(Methoxymethyl)-2,3-dihydrothieno[3,4-b][1,4]dioxin, 2-(Ethoxymethyl)-2,3-dihydrothieno[3,4-b][1,4]dioxin, 2-(n-Propoxymethyl)-2,3-dihydrothieno[3,4-b][1,4]dioxin, 2-(n-Butoxymethyl)-2,3-dihydrothieno[3,4-b][1,4]dioxin, 2-(n-Pentyloxymethyl)-2,3-dihydrothieno[3,4-b] [1,4]-dioxin, 2-(n-Hexyloxymethyl)-2,3-dihydrothieno[3,4-b][1,4]dioxin, 2-(n-Heptyloxymethyl)-2,3-dihydrothieno[3,4-b][1,4]dioxin, 2-(n-Octyloxymethyl)-2,3-dihydrothieno[3,4-b][1,4]dioxin, 2-(2-Ethylhexyloxymethyl)-2,3-dihydrothieno[3,4-b][1,4]-dioxin, 2-(n-Nonyloxymethyl)-2,3-dihydrothieno[3,4-b][1,4]dioxin, 2-(Cyclopentyloxymethyl)-2,3-dihydrothieno[3,4-b][1,4]dioxin, 2-(Cyclohexyloxymethyl)-2,3-dihydrothieno[3,4-b][1,4]dioxin, 2-(Benzyloxymethyl)-2,3-dihydrothieno[3,4-b][1,4]-dioxin.

Bevorzugte Monomere aus dieser Gruppe sind: 2,3-Dihydrothieno[3,4-b][1,4]dioxin-2-ylmethanol, 2-(Methoxymethyl)-2,3-dihydrothieno[3,4-b][1,4]dioxin, 2-(Ethoxymethyl)-2,3-dihydrothieno[3,4-b][1,4]dioxin, 2-(n-Propoxymethyl)-2,3-dihydrothieno[3,4-b][1,4]dioxin, 2-(n-Butoxymethyl)-2,3-dihydrothieno[3,4-b][1,4]dioxin, 2-(n-Pentyloxymethyl)-2,3-dihydrothieno[3,4-b][1,4]dioxin.

Besonders bevorzugte Monomere aus dieser Gruppe sind: 2,3-Dihydrothieno[3,4-b]-[1,4]dioxin-2-ylmethanol, 2-(Methoxymethyl)-2,3-dihydrothieno[3,4-b][1,4]dioxin, 2-(Ethoxymethyl)-2,3-dihydrothieno[3,4-b][1,4]dioxin, 2-(n-Propoxymethyl)-2,3-dihydrothieno[3,4-b][1,4]dioxin, 2-(n-Butoxymethyl)-2,3-dihydrothieno[3,4-b] [1,4]-dioxin.

Die Konzentration der Monomere im organischen Lösemittel kann in einem großen Bereich gewählt werden. Bevorzugt wird das Monomer in einer Konzentration von 0,2 bis 5 Gew.-% eingesetzt.

Mit dem erfindungsgemäßen Verfahren lassen sich neutrale Polymere der Formel I herstellen, wobei n für eine ganze Zahl von 2 bis 200, bevorzugt 2 bis 50, besonders bevorzugt 2 bis 30 steht.

Es ist auch möglich neutrale Copolymere der Formeln (III) oder (III a), 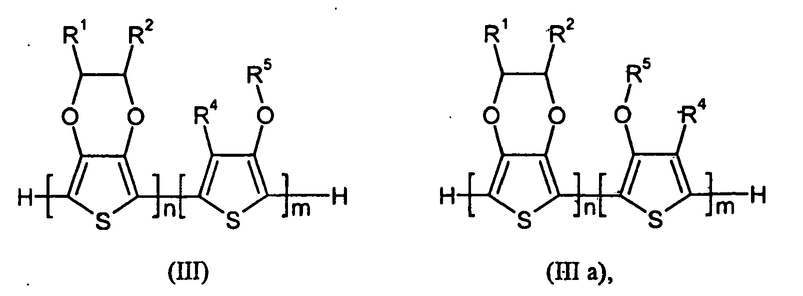 worin
- R¹ und R²: unabhängig voneinander jeweils für H oder C₁ bis C₉-Alkyl stehen, wobei für den Fall, dass R¹ für H steht R² auch CH₂-O-R³ sein kann, mit R³ = H oder C₁ bis C₉-Alkyl, Cycloalkyl oder Aralkyl,
- R⁴: für eine lineare oder verzweigte Alkylgruppe mit 1 bis 18 C-Atomen, eine gegebenenfalls C₁- bis C₆-alkylsubstituierte Cycloalkylgruppe mit insgesamt 5 bis 12 C-Atomen, eine gegebenenfalls substituierte Arylgruppe mit 6 bis 10 C-Atomen oder eine lineare oder verzweigte C₁- C₁₈-Alkoxygruppe,
- R⁵: für eine lineare oder verzweigte Alkylgruppe mit 1 bis 18 C-Atomen, eine gegebenenfalls C₁- bis C₆-alkylsubstituierte Cycloalkylgruppe mit insgesamt 5 bis 12 C-Atomen, eine gegebenenfalls substituierte Arylgruppe mit 6 bis 10 C-Atomen oder eine Aralkylgruppe mit 7 bis 12 C-Atomen, und
- n und m: unabhängig voneinander für eine ganze Zahl von 1 bis 200 stehen, zu erhalten.

Dazu wird wie oben beschrieben vorgegangen, wobei als Monomer ein Gemisch aus einer Verbindung der Formel (II) und einer Verbindung der Formel (IV) 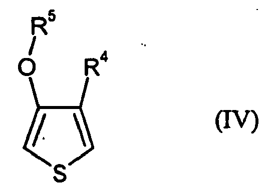 wobei
- R⁴: für eine lineare oder verzweigte Alkylgruppe mit 1 bis 18 C-Atomen, eine gegebenenfalls C₁- bis C₆-alkylsubstituierte Cycloalkylgruppe mit insgesamt 5 bis 12 C-Atomen, eine gegebenenfalls substituierte Arylgruppe mit 6 bis 10 C-Atomen oder eine lineare oder verzweigte C₁-C₁₈-Alkoxygruppe, und
- R⁵: für eine lineare oder verzweigte Alkylgruppe mit 1 bis 18 C-Atomen, eine gegebenenfalls C₁- bis C₆-alkylsubstituierte Cycloalkylgruppe mit insgesamt
5 bis 12 C-Atomen, eine gegebenenfalls substituierte Arylgruppe mit 6 bis 10 C-Atomen oder eine Aralkylgruppe mit 7 bis 12 C-Atomen stehen,
eingesetzt wird.

Entsprechende Thiophen-Polymere oder -Copolymere waren bisher nicht oxidativ in organisch löslicher, neutraler Form zugänglich. Die Thiophen-Polymere und -Copolymere zeichnen sich insbesondere dadurch aus, dass sie in organischen Lösemitteln löslich und frei von organisch gebundenem Halogen sind.

Gegenstand der Erfindung sind auch neutrale Verbindungen der allgemeinen Formel (I), 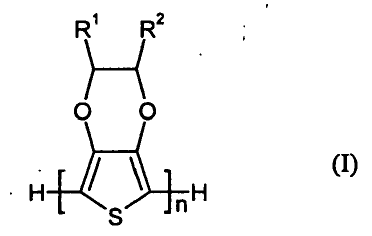 worin
- R¹ und R²: unabhängig voneinander jeweils für H oder C₁ bis C₅-Alkyl stehen, wobei für den Fall, dass R¹ für H steht R² auch CH₂-O-R³ sein kann, mit R³ = H oder C₁ bis C₉-Alkyl, Cycloalkyl oder Aralkyl, und
- n: für eine ganze Zahl von 2 bis 200 steht,
wobei diese in organischen Lösemitteln löslich und frei von organisch gebundenem Halogen sind.

Als löslich im Sinne dieser Anmeldung werden Verbindungen bezeichnet, die in einer Menge von mindestens 1 Gew.-% , vorzugsweise mindestens 5 Gew.-%, besonders bevorzugt mindestens 10 Gew.-% in mindestens einem organischen Lösemittel gelöst werden können. Unter organischen Lösemitteln werden dabei beispielsweise halogenierte aliphatische Kohlenwasserstoffe, aromatische Kohlenwasserstoffe, halogenierte aromatische Kohlenwasserstoffe, Dialkylether, cyclische Ether und dipolare aprotische organische Lösemittel verstanden.

Vorzugsweise lösen sich die erfindungsgemäßen Verbindungen in einer Menge von mindestens 1 Gew.-% in einem organischen Lösemittel ausgewählt aus der Gruppe: Chloroform, Methylenchlorid und Tetrahydrofuran. Bevorzugt lösen sie sich in einer Menge von mindestens 5 Gew.-%, besonders bevorzugt in einer Menge von mindestens 10 Gew.-%.

Als frei von Halogen werden Verbindungen verstanden, die weniger als 1000 ppm, vorzugsweise weniger als 500 ppm, insbesondere bevorzugt weniger als 100 ppm Halogen enthalten.

Bevorzugt sind neutrale Verbindungen der allgemeinen Formel I, wobei R¹ und R² unabhängig voneinander für H oder C₁ bis C₂-Alkyl stehen, oder R¹ = H und R² = CH₂-O-R³ mit R³ = H, C₁ bis C₄-Alkyl bedeuten.

Insbesondere bevorzugt sind Verbindungen der Formel I, wobei R¹ und R² für H stehen.

Gegenstand der Erfindung sind weiterhin nach dem erfindungsgemäßen Verfahren erhältliche neutrale Copolymere der Formeln (III) oder (III a), 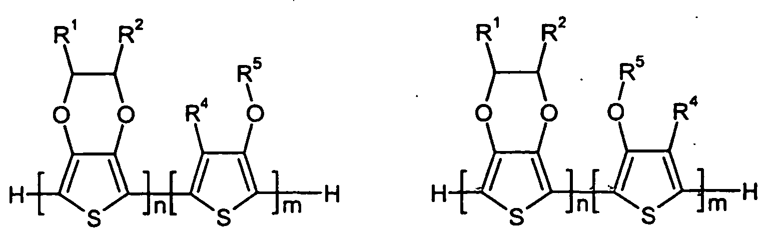 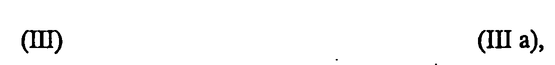 worin
- R¹ und R²: unabhängig voneinander jeweils für H oder C₁ bis C₉-Alkyl stehen, wobei für den Fall, dass R¹ für H steht R² auch CH₂-O-R³ sein kann, mit R³ = H oder C₁ bis C₉-Alkyl, Cycloalkyl oder Aralkyl,
- R⁴: für eine lineare oder verzweigte Alkylgruppe mit 1 bis 18 C-Atomen, eine gegebenenfalls C₁- bis C₆-alkylsubstituierte Cycloalkylgruppe mit insgesamt 5 bis 12 C-Atomen, eine gegebenenfalls substituierte Arylgruppe mit 6 bis 10 C-Atomen oder eine lineare oder verzweigte C₁- C₁₈-Alkoxygruppe,
- R⁵: für eine lineare oder verzweigte Alkylgruppe mit 1 bis 18 C-Atomen, eine gegebenenfalls C₁- bis C₆-alkylsubstituierte Cycloalkylgruppe mit insgesamt 5 bis 12 C-Atomen, eine gegebenenfalls substituierte Arylgruppe mit 6 bis 10 C-Atomen oder eine Aralkylgruppe mit 7 bis 12 C-Atomen, und
- n und m: unabhängig voneinander für eine ganze Zahl von 1 bis 200 stehen,
wobei diese in organischen Lösemitteln löslich und frei von organisch gebundenem Halogen sind.

Dabei können die Strukturen (III) und (III a) in beliebigen Verhältnissen nebeneinander und auch im gleichen Polymermolekül vorliegen; ferner sind die Reihenfolgen der Monomeren in der Polymerstruktur beliebig, bevorzugt aber statistisch. Es können jedoch auch Blöcke unterschiedlicher Länge in den Molekülen auftreten.

Vorzugsweise bedeuten in den erfindungsgemäßen Copolymeren der Formeln (III) bzw. (III a) R⁴ = Methyl, Phenyl oder OR⁵ und R⁵ = C₁- bis C₁₈-Alkyl, besonders bevorzugt R⁴ = OR⁵ = Methoxy, Ethoxy, n-Propoxy, n-Butoxy, n-Hexyloxy, 2-Ethylhexyloxy, n-Octyloxy, n-Decyloxy, n-Dodecyloxy oder n-Tetradecyloxy.

R¹ und R² stehen bevorzugt unabhängig voneinander für H oder C₁ bis C₂-Alkyl, oder R¹ für H und R² für CH₂-O-R³ mit R³ = H, C₁ bis C₄-Alkyl, insbesondere bevorzugt stehen R¹ und R² für H.

Vorzugsweise werden die erfindungsgemäßen Verbindungen der Formel (I) und die erfindungsgemäßen Copolymere der Formeln (III) und (IIIa) nach dem erfindungsgemäßen Verfahren hergestellt.

Die nach dem erfindungsgemäßen Verfahren hergestellten bzw. erfindungsgemäßen Polythiophene sind intensiv rotbraune, rote oder violettrote Feststoffe, die in organischen Lösemitteln wie Methylenchlorid, Chloroform oder Tetrahydrofuran löslich sind und deren Lösungen fluoreszieren. Sie sind daher für Anwendungen, z.B. in der Elektronikindustrie, aus organischer Lösung leicht verarbeitbar. Aus solchen Lösungen lassen sich in Anwesenheit eines Gegenions leicht, d.h. auch mit milden Oxidationsmitteln, dotierte, hervorragend leitfähige kationische Polythiophene bzw. Polythiophen-Schichten herstellen.

Die erfindungsgemäß hergestellten oder erfindungsgemäßen neutralen Verbindungen oder Copolymere können daher zur Herstellung von kationischen und somit dotierten Polythiophenen verwendet werden, wobei die neutralen Verbindungen oder Copolymere in Gegenwart einer Protonensäure oxidiert werden.

Die erfindungsgemäß hergestellten oder erfindungsgemäßen neutralen Verbindungen oder Copolymere lassen sich auch zur Herstellung von Schichten aus kationischen Polythiophenen nutzen, indem die neutralen Verbindungen oder Copolymere auf ein Substrat aufgebracht und durch Luftsauerstoff in Gegenwart einer organischen Sulfonsäure z.B. aus der Gruppe p-Toluolsulfonsäure, p-n-Dodecylbenzolsulfonsäure und Poly(styrolsulfonsäure) oxidiert werden. Das Aufbringen auf das Substrat kann dabei als Feststoff oder aus Lösung vor oder nach der Oxidation erfolgen. Geeignete Verfahren zum Aufbringen von Feststoffen oder Lösungen auf Substrate sind hinlänglich bekannt. Erwähnt sei hier beispielhaft das Aufbringen aus Lösung mittels Rakeln, Spin-coating oder Ink-jet-Verfahren.

Die erfindungsgemäß hergestellten oder erfindungsgemäßen neutralen Verbindungen oder Copolymere können überdies in neutraler Form oder in nachträglich dotierter und somit kationischer Form zur Herstellung von elektrischen oder elektronischen Bauteilen z.B. zur Herstellung von Leuchtelementen, Photozellen oder organischen Transistoren, zur Ausrüstung von Kunststofffolien für die Verpackung elektronischer Bauteile und für Reinraumverpackungen, für die antistatische Ausrüstung von Kathodenstrahlröhren, für die antistatische Ausrüstung von photographischen Filmen, als transparente Heizung, als transparente Elektroden, als Leiterplatten oder für elektrisch einfärbbare Fensterscheiben verwendet werden.

### Beispiele

### Beispiel 1 (Poly(2,3-Dihydrothieno[3,4-b][1,4]dioxin = PEDT)

1,422 g (10 mMol) Ethylen-3,4-dioxythiophen (EDT) = 2,3-Dihydrothieno[3,4-b][1,4]dioxin wurde in 100 ml Chloroform vorgelegt. 3,083 g (19 mMol) Eisen-III-chlorid (wasserfrei) wurde in 10 Portionen innerhalb von 7,5 h unter Rühren bei Raumtemperatur (23°C) zudosiert. Nach weiteren 16 h Rühren bei Raumtemperatur wurden 50 ml konz. Ammoniak und 100 ml Methylenchlorid zugegeben und 1 h nachgerührt. Nach Filtration wurde dieser Vorgang wiederholt und anschließend die organische Phase mit 0,05-molarer Ethylendiamintetraacetat-Lösung zur Entfernung restlicher Fe-Ionen ausgeschüttelt. Danach wurde die dunkelrote organische Phase mehrfach mit Wasser gewaschen, mit Natriumsulfat getrocknet und anschließend im Wasserstrahlvakuum zur Trockne eingeengt. Der Rückstand (0,7 g Rohprodukt) wurde zur weiteren Reinigung mit Ethanol zum Rückfluss erhitzt. Nach Abkühlen wurden 0,15 g neutrales PEDT als rotbraunes Pulver isoliert. Das Produkt ist löslich z.B. in CHCl₃, CH₂Cl₂ oder THF mit intensiver rotvioletter Farbe; die Lösungen fluoreszieren.

Molmasse (M_{w}) bestimmt mittels Gelpermeationschromatographie (GPC): 1.220 (Polystyrol-Eichung)
IR-Spektrum (KBr-Pressling): 3105 cm⁻¹ (υ_{CH} der Thiophen-Endgruppen), 2970, 2920 und 2870 cm⁻¹ (υ_{CHaliph}), 1480 cm⁻¹, 1435 cm⁻¹, 1370 cm⁻¹, 1070 cm⁻¹, 905 cm⁻¹. ¹H-NMR-Spektrum (σ gegen TMS; CDCl₃): 4,0 - 4,5 ppm, aliph H; 6,1 - 6,4 ppm, Thiophen-H der Endgruppen.

### Beispiel 2 (Poly(2-Methyl-2,3-Dihydrothieno [3,4-b][1,4]dioxin)

Analog zu Beispiel 1, jedoch unter N₂ wurden 2,03 g (13 mMol) 2-Methyl-2,3-dihydrothieno[3,4-b][1,4]dioxin und 4,007 g (24,7 mMol) Eisen-III-chlorid (wasserfrei) miteinander umgesetzt und wie oben beschrieben aufgearbeitet. Zur Reinigung des Rohprodukts (1,4 g) wurde mit einigen ml Methanol 30 min unter Rückfluss erhitzt. Erhalten wurden 0,88 g des Polymeren in Form eines purpurfarbenen Pulvers. Das Produkt ist löslich z.B. in CHCl₃, CH₂Cl₂ oder THF mit intensiver rotvioletter Farbe; die Lösungen fluoreszieren.

Molmasse (M_{w}) nach GPC: 7.340 (Polystyrol-Eichung)

### Beispiel 3 (Poly(2,3-Dihydrothieno[3,4-b][1,4]dioxin = PEDT; Herstellung in Gegenwart einer Base)

Analog zu Beispiel 1, jedoch unter N₂ und in Gegenwart von 7,6 g (75,9 mMol) Calciumcarbonat wurden 2,844 g (20 mMol) EDT mit 6,164 g ( 38 mMol) Eisen-III-chlorid (wasserfrei) umgesetzt und wie oben beschrieben aufgearbeitet. Das Rohprodukt (0,53 g) wurde mit einigen ml Methanol 30 min zum Rückfluss erhitzt. Nach Filtration wurden 0,39 g PEDT erhalten.

Molmasse (M_{w}) nach GPC: 1.150 (Polystyrol-Eichung)

### Beispiel 4 (Poly(2-(n-Butoxymethyl)-2,3-dihydrothieno[3,4-b][1,4]dioxin)

Analog zu Beispiel 1, jedoch unter N₂ wurden 2,143 g (10 mMol) 2-(n-Butoxymethyl)-2,3-dihydrothieno[3,4-b][1,4]dioxin und 3,082 g (19 mMol) FeCl₃ miteinander umgesetzt und analog gereinigt. Es wurden 0,56 g reines Poly(2-(n-Butoxymethyl)-2,3-dihydrothieno[3,4-b][1,4]dioxin als rotbraunes Pulver erhalten, das in CHCl₃, CH₂Cl₂ oder THF mit intensiver rotvioletter Farbe löslich ist; die Lösungen fluoreszieren.

Molmasse (M_{w}) nach GPC 8.330: (Polystyrol-Eichung)

### Beispiel 5 Copolymer aus EDT und 3,4-Di-n-propoxythiophen

Analog zu Beispiel 1, jedoch unter N₂ und in Gegenwart von 3,8 g Calciumcarbonat wurden 1,422 g (10 mMol) EDT und 2,003 g (10 mMol) 3,4-Di-n-propoxythiophen mit 6,164 g (38 mMol) FeCl₃ umgesetzt. Reinausbeute: 1,39 g Copolymer aus EDT/Dipropoxythiophen als tiefdunkelviolettes Pulver, das in CHCl₃, CH₂Cl₂ und THF löslich ist und in Lösung fluoresziert.

## Patentansprüche

1. Verfahren zur Herstellung von neutralen Verbindungen der allgemeinen Formel (I), 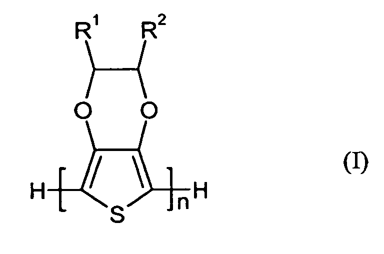 worin
R¹ und R² unabhängig voneinander jeweils für H oder C₁ bis C₉-Alkyl stehen, wobei für den Fall, dass R¹ für H steht R² auch CH₂-O-R³ sein kann, mit R³ = H oder C₁ bis C₉-Alkyl, Cycloalkyl oder Aralkyl, und
n für eine ganze Zahl von 2 bis 200 steht,
durch Umsetzung von Monomeren der allgemeinen Formel (II), 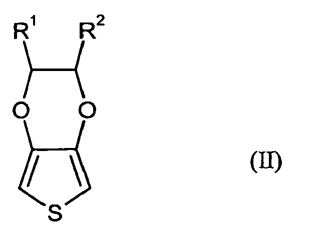 worin
R¹ und R² die oben genannte Bedeutung haben,
mit einem Oxidationsmittel, **dadurch gekennzeichnet, dass** die Umsetzung in einem organischen Lösemittel erfolgt und das Oxidationsmittel in einer Menge von 50 bis 99,9 % der stöchiometrisch erforderlichen Menge eingesetzt wird und in der Reaktionsmischung die Reaktionspartner stets in solchen Mengen vorliegen, dass es nie zum Vorliegen eines Überschusses an Oxidationsmittel von größer als 1,998: 1, bezogen auf das im Reaktionsgemisch vorliegende Monomer, kommt.

2. Verfahren gemäß Anspruch 1, **dadurch gekennzeichnet, dass** R¹ und R² unabhängig voneinander jeweils für H oder C₁ bis C₅-Alkyl stehen, wobei für den Fall, dass R¹ für H steht, R² auch CH₂-O-R³ mit R³ = H oder C₁ bis C₅-Alkyl bedeuten kann.

3. Verfahren gemäß Anspruch 1, **dadurch gekennzeichnet, dass** R¹ und R² unabhängig voneinander jeweils für H oder C₁ bis C₂-Alkyl stehen, wobei für den Fall, dass R¹ für H steht, R² auch CH₂-O-R³ mit R³ = H oder C₁ bis C₄-Alkyl bedeuten kann.

4. Verfahren gemäß Anspruch 1, **dadurch gekennzeichnet, dass** R¹ und R² für H stehen.

5. Verfahren gemäß wenigstens eines der Ansprüche 1 bis 4, **dadurch gekennzeichnet, dass** als Oxidationsmittel eine Eisen-III-Verbindung eingesetzt wird.

6. Verfahren gemäß Anspruch 5, **dadurch gekennzeichnet, dass** das Oxidationsmittel Eisen-III-chlorid oder Eisen-III-tosylat ist.

7. Verfahren gemäß Anspruch 6, **dadurch gekennzeichnet, dass** das Oxidationsmittel Eisen-III-chlorid ist.

8. Verfahren gemäß wenigstens eines der Ansprüche 1 bis 7, **dadurch gekennzeichnet, dass** als organisches Lösemittel ein aprotisches Lösemittel eingesetzt wird.

9. Verfahren gemäß wenigstens eines der Anspüche 1 bis 8, **dadurch gekennzeichnet, dass** als organisches Lösemittel ein halogenierter Kohlenwasserstoff eingesetzt wird.

10. Verfahren gemäß wenigstens eines der Anspüche 1 bis 9, **dadurch gekennzeichnet, dass** die Reaktion in Gegenwart einer Base durchgeführt wird.

11. Verfahren gemäß Anspruch 10, **dadurch gekennzeichnet, dass** es sich bei der Base um ein Alkali- oder Erdalkalicarbonat handelt.

12. Verfahren gemäß wenigstens eines der Anspüche 1 bis 11, **dadurch gekennzeichnet, dass** das Oxidationsmittel in einer Menge von 80 bis 96 % der stöchiometrisch erforderlichen Menge eingesetzt wird.

13. Verfahren gemäß wenigstens eines der Anspüche 1 bis 12, **dadurch gekennzeichnet, dass** neutrale Copolymere der Formeln (III) oder (III a), 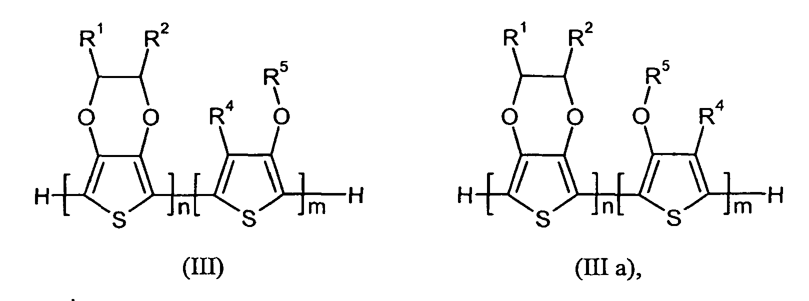 worin
R¹ und R² die in den Ansprüchen 1 bis 4 genannte Bedeutung haben,
R⁴ für eine lineare oder verzweigte Alkylgruppe mit 1 bis 18 C-Atomen, eine gegebenenfalls C₁- bis C₆-alkylsubstituierte Cycloalkylgruppe mit insgesamt 5 bis 12 C-Atomen, eine gegebenenfalls substituierte Arylgruppe mit 6 bis 10 C-Atomen oder eine lineare oder verzweigte C₁- C₁₈-Alkoxygruppe,
R⁵ für eine lineare oder verzweigte Alkylgruppe mit 1 bis 18 C-Atomen, eine gegebenenfalls C₁- bis C₆-alkylsubstituierte Cycloalkylgruppe mit insgesamt 5 bis 12 C-Atomen, eine gegebenenfalls substituierte Arylgruppe mit 6 bis 10 C-Atomen oder eine Aralkylgruppe mit 7 bis 12 C-Atomen, und
n und m unabhängig voneinander für eine ganze Zahl von 1 bis 200 stehen, erhalten werden, indem als Monomere ein Gemisch aus einer Verbindung der Formel (II) und einer Verbindung der Formel (IV), 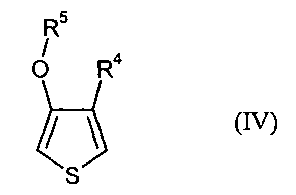 wobei R⁴ und R⁵ die für die allgemeinen Formeln (III) und (IIIa) genennte Bedeutung haben,
eingesetzt werden.

14. Neutrale Verbindungen der allgemeinen Formel (I), 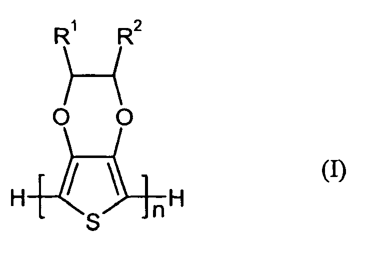 worin
R¹ und R² unabhängig voneinander jeweils für H oder C₁ bis C₉-Alkyl stehen, wobei für den Fall, dass R¹ für H steht R² auch CH₂-O-R³ sein kann, mit R³ = H oder C₁ bis C₉-Alkyl, Cycloalkyl oder Aralkyl, und
n für eine ganze Zahl von 2 bis 200 steht,
**dadurch gekennzeichnet, dass** sie in organischen Lösemitteln löslich und frei von organisch gebundenem Halogen sind.

15. Verbindungen gemäß Anspruch 14, **dadurch gekennzeichnet, dass** R¹ und R² für H stehen.

16. Neutrale Copolymere der Formeln (III) oder (III a), 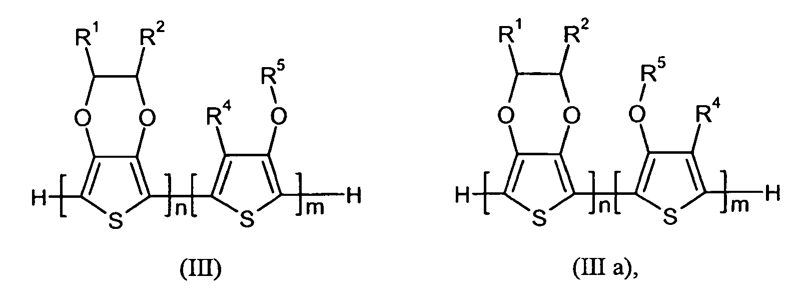 worin
R¹ und R² unabhängig voneinander jeweils für H oder C₁ bis C₉-Alkyl stehen, wobei für den Fall, dass R¹ für H steht R² auch CH₂-O-R³ sein kann, mit R³ = H oder C₁ bis C₉-Alkyl, Cycloalkyl oder Aralkyl,
R⁴ für eine lineare oder verzweigte Alkylgruppe mit 1 bis 18 C-Atomen, eine gegebenenfalls C₁- bis C₆-alkylsubstituierte Cycloalkylgruppe mit insgesamt 5 bis 12 C-Atomen, eine gegebenenfalls substituierte Arylgruppe mit 6 bis 10 C-Atomen oder eine lineare oder verzweigte C₁- C₁₈-Alkoxygruppe,
R⁵ für eine lineare oder verzweigte Alkylgruppe mit 1 bis 18 C-Atomen, eine gegebenenfalls C₁- bis C₆-alkylsubstituierte Cycloalkylgruppe mit insgesamt 5 bis 12 C-Atomen, eine gegebenenfalls substituierte Arylgruppe mit 6 bis 10 C-Atomen oder eine Aralkylgruppe mit 7 bis 12 C-Atomen, und
n und m unabhängig voneinander für eine ganze Zahl von 1 bis 200 stehen,
**dadurch gekennzeichnet, dass** sie in organischen Lösemitteln löslich und frei von organisch gebundenem Halogen sind.

17. Verwendung der neutralen Verbindungen oder Copolymere gemäß wenigstens eines der Ansprüche 14 bis 16 zur Herstellung von kationischen Polythiophenen, **dadurch gekennzeichnet, dass** die neutralen Verbindungen oder Copolymere in Gegenwart einer Protonensäure oxidiert werden.

18. Verwendung der neutralen Verbindungen oder Copolymere gemäß wenigstens eines der Ansprüche 14 bis 16 zur Herstellung von Schichten aus kationischen Polythiophenen, **dadurch gekennzeichnet, dass** die neutralen Verbindungen oder Copolymere auf ein Substrat aufgebracht und durch Luftsauerstoff in Gegenwart einer organischen Sulfonsäure oxidiert werden.

19. Verwendung der neutralen Verbindungen oder Copolymere gemäß wenigstens eines der Ansprüche 14 bis 16 zur Herstellung von elektrischen oder elektronischen Bauteilen z.B. zur Herstellung von Leuchtelementen, Photozellen oder organischen Transistoren, zur Ausrüstung von Kunststofffolien für die Verpackung elektronischer Bauteile und für Reinraumverpackungen, für die antistatische Ausrüstung von Kathodenstrahlröhren, für die antistatische Ausrüstung von photographischen Filmen, als transparente Heizung, als transparente Elektroden, als Leiterplatten oder für elektrisch einfärbbare Fensterscheiben.

## Claims

1. Process for the preparation of neutral compounds of the general formula (I), 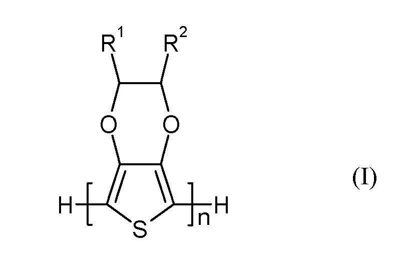 in which
R¹ and R², independently of one another, each represent H or C₁ to C₉-alkyl, it also being possible for R² to be CH₂-O-R³, with R³ = H or C₁ to C₉-alkyl, cycloalkyl or aralkyl, when R¹ represents H, and
n represents an integer from 2 to 200,
by reaction of monomers of the general formula (II), 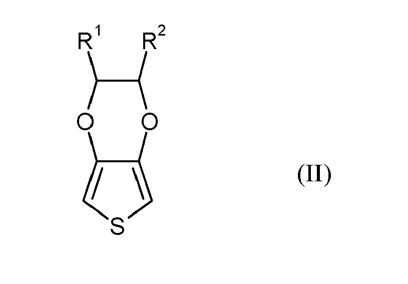 in which
R¹ and R² have the abovementioned meanings,
with an oxidizing agent, **characterized in that** the reaction is carried out in an organic solvent and the oxidizing agent is used in an amount of 50 to 99.9% of the stoichiometrically required amount and the reactants are always present in the reaction mixture in amounts such that an excess of oxidizing agent of more than 1.998 : 1, relative to the monomer present in the reaction mixture, is never present.

2. Process according to Claim 1, **characterized in that** R¹ and R², independently of one another, each represent H or C₁ to C₅-alkyl, it also being possible for R² to denote CH₂-O-R³ with R³ = H or C₁ to C₅-alkyl when R¹ represents H.

3. Process according to Claim 1, **characterized in that** R¹ and R², independently of one another, each represent H or C₁ to C₂-alkyl, it also being possible for R² to denote CH₂-O-R³ with R³ = H or C₁ to C₄-alkyl when R¹ represents H.

4. Process according to Claim 1, **characterized in that** R¹ and R² represent H.

5. Process according to at least one of Claims 1 to 4, **characterized in that** an iron(III) compound is used as the oxidizing agent.

6. Process according to Claim 5, **characterized in that** the oxidizing agent is iron(III) chloride or iron(III) tosylate.

7. Process according to Claim 6, **characterized in that** the oxidizing agent is iron(III) chloride.

8. Process according to at least one of Claims 1 to 7, **characterized in that** an aprotic solvent is used as the organic solvent.

9. Process according to at least one of Claims 1 to 8, **characterized in that** a halogenated hydrocarbon is used as the organic solvent.

10. Process according to at least one of Claims 1 to 9, **characterized in that** the reaction is carried out in the presence of a base.

11. Process according to Claim 10, **characterized in that** the base is an alkali metal or alkaline earth metal carbonate.

12. Process according to at least one of Claims 1 to 11, **characterized in that** the oxidizing agent is used in an amount of 80 to 96% of the stoichiometically required amount.

13. Process according to at least one of Claims 1 to 12, **characterized in that** neutral copolymers of the formulae (III) or (III a), 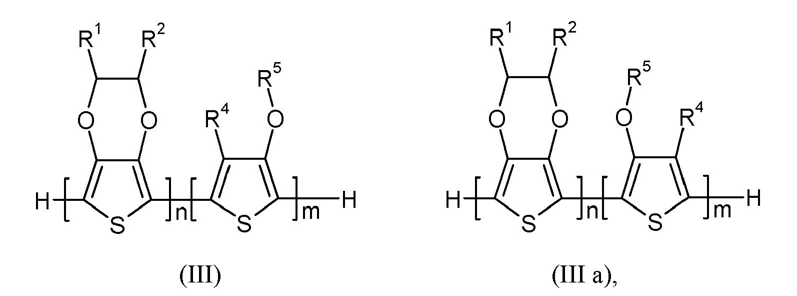 in which
R¹ and R² have the meanings stated in Claims 1 to 4,
R⁴ represents a linear or branched alkyl group having 1 to 18 C atoms, an optionally C₁- to C₆-alkyl-substituted cycloalkyl group having a total of 5 to 12 C atoms, an optionally substituted aryl group having 6 to 10 C atoms or a linear or branched C₁- C₁₈-alkoxy group,
R⁵ represents a linear or branched alkyl group having 1 to 18 C atoms, an optionally C₁- to C₆-alkyl-substituted cycloalkyl group having a total of 5 to 12 C atoms, an optionally substituted aryl group having 6 to 10 C atoms or an aralkyl group having 7 to 12 C atoms, and
n and m, independently of one another, represent an integer from 1 to 200, are obtained by a mixture of a compound of the formula (II) and a compound of the formula (IV) 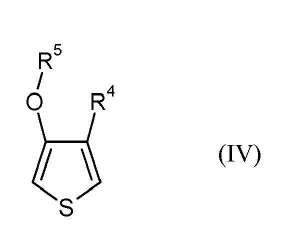 in which R⁴ and R⁵ have the meanings stated for the general formulae (III) and (IIIa),
being used as monomer.

14. Neutral compounds of the general formula (I), 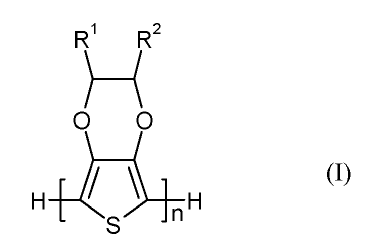 in which
R¹ and R², independently of one another, each represent H or C₁ to C₉-alkyl, it also being possible for R² to be CH₂-O-R³, with R³ = H or C₁ to C₉-alkyl, cycloalkyl or aralkyl, when R¹ represents H, and
n represents an integer from 2 to 200,
**characterized in that** they are soluble in organic solvents and are free of organically bound halogen.

15. Compounds according to Claim 14, **characterized in that** R¹ and R² represent H.

16. Neutral copolymers of the formulae (III) or (III a), 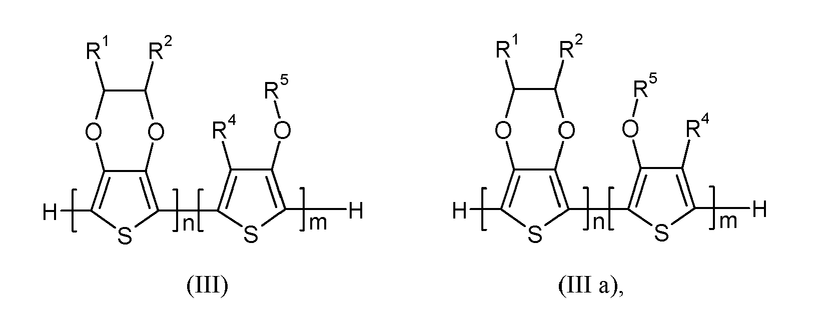 in which
R¹ and R², independently of one another, each represent H or C₁ to C₉-alkyl, it also being possible for R² to be CH₂-O-R³, with R³ = H or C₁ to C₉-alkyl, cycloalkyl or aralkyl, when R¹ represents H,
R⁴ represents a linear or branched alkyl group having 1 to 18 C atoms, an optionally C₁- to C₆-alkyl-substituted cycloalkyl group having a total of 5 to 12 C atoms, an optionally substituted aryl group having 6 to 10 C atoms or a linear or branched C₁-C₁₈-alkoxy group,
R⁵ represents a linear or branched alkyl group having 1 to 18 C atoms, an optionally C₁- to C₆-alkyl-substituted cycloalkyl group having a total of 5 to 12 C atoms, an optionally substituted aryl group having 6 to 10 C atoms or an aralkyl group having 7 to 12 C atoms, and
n and m, independently of one another, represent an integer from 1 to 200,
**characterized in that** they are soluble in organic solvents and are free of organically bound halogen.

17. Use of the neutral compounds or copolymers according to at least one of Claims 14 to 16 for the preparation of cationic polythiophenes, **characterized in that** the neutral compounds or copolymers are oxidized in the presence of a protic acid.

18. Use of the neutral compounds or copolymers according to at least one of Claims 14 to 16 for the production of layers of cationic polythiophenes, **characterized in that** the neutral compounds or copolymers are applied to a substrate and are oxidized by atmospheric oxygen in the presence of an organic sulphonic acid.

19. Use of the neutral compounds or copolymers according to at least one of Claims 14 to 16 for the production of electrical or electronic components, for example for the production of fluorescent elements, photocells or organic transistors, for the treatment of plastics films for the packaging of electronic components and for clean-room packaging, for the antistatic treatment of cathode ray tubes, for the antistatic treatment of photographic films, as transparent heating, as transparent electrodes, as circuit boards or for electrically colourable window panes.

## Revendications

1. Procédé pour la préparation de composés neutres de formule générale (I) 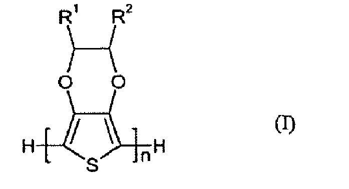 où
R¹ et R² représentent, indépendamment l'un de l'autre, à chaque fois H ou C₁ à C₉-alkyle, où, pour le cas où R¹ représente H, R² peut également représenter CH₂-O-R³, avec R³ = H ou C₁ à C₉-alkyle, cycloalkyle ou aralkyle, et
n vaut un nombre entier de 2 à 200,
par transformation de monomères de formule générale (II), 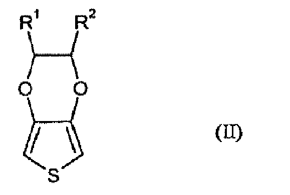 où
R¹ et R² ont la signification susmentionnée,
avec un oxydant, **caractérisé en ce que** la transformation est réalisée dans un solvant organique et l'oxydant est utilisé en une quantité de 50 à 99,9% de la quantité stoechiométriquement nécessaire et les partenaires se trouvent toujours dans le mélange réactionnel en des quantités telles qu'on ne se trouve jamais en présence d'un excès d'oxydant supérieur à 1,998:1, par rapport au monomère se trouvant dans le mélange réactionnel.

2. Procédé selon la revendication 1, **caractérisé en ce que** R¹ et R² représentent, indépendamment l'un de l'autre, à chaque fois H ou C₁ à C₅-alkyle, où, pour le cas où R¹ représente H, R² peut également signifier CH₂-O-R³ avec R³ = H ou C₁ à C₅-alkyle.

3. Procédé selon la revendication 1, **caractérisé en ce que** R¹ et R² représentent, indépendamment l'un de l'autre, à chaque fois H ou C₁ à C₂-alkyle, où, pour le cas où R¹ représente H, R² peut également signifier CH₂-O-R³ avec R³ = H ou C₁ à C₄-alkyle.

4. Procédé selon la revendication 1, **caractérisé en ce que** R¹ et R² représentent H.

5. Procédé selon au moins l'une quelconque des revendications 1 à 4, **caractérisé en ce qu'**on utilise comme oxydant un composé à base de fer-III.

6. Procédé selon la revendication 5, **caractérisé en ce que** l'oxydant est le chlorure de fer III ou le tosylate de fer III.

7. Procédé selon la revendication 6, **caractérisé en ce que** l'oxydant est le chlorure de fer III.

8. Procédé selon au moins l'une quelconque des revendications 1 à 7, **caractérisé en ce qu'**on utilise comme solvant organique un solvant aprotique.

9. Procédé selon au moins l'une quelconque des revendications 1 à 8, **caractérisé en ce qu'**on utilise comme solvant organique un hydrocarbure halogéné.

10. Procédé selon au moins l'une quelconque des revendications 1 à 9, **caractérisé en ce que** la réaction est réalisée en présence d'une base.

11. Procédé selon la revendication 10, **caractérisé en ce qu'**il s'agit, pour la base, d'un carbonate de métal alcalin ou alcalino-terreux.

12. Procédé selon au moins l'une quelconque des revendications 1 à 11, **caractérisé en ce qu'**on utilise l'oxydant en une quantité représentant 80 à 96% de la quantité stoechiométriquement nécessaire.

13. Procédé selon au moins l'une quelconque des revendications 1 à 12, **caractérisé en ce qu'**on obtient des copolymères neutres des formules (III) ou (IIIa), 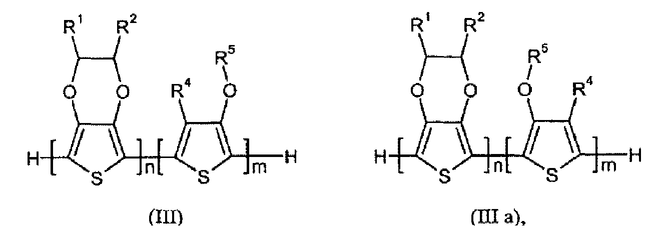 où
R¹ et R² présentent la signification mentionnée dans les revendications 1 à 4,
R⁴ représente un groupe alkyle linéaire ou ramifié, comprenant 1 à 18 atomes de carbone, un groupe cycloalkyle le cas échéant substitué par C₁ à C₆-alkyle, comprenant au total 5 à 12 atomes de carbone, un groupe aryle le cas échéant substitué, comprenant 6 à 10 atomes de carbone ou un groupe C₁-C₁₈-alcoxy linéaire ou ramifié,
R⁵ représente un groupe alkyle linéaire ou ramifié, comprenant 1 à 18 atomes de carbone, un groupe cycloalkyle le cas échéant substitué par C₁ à C₆-alkyle, comprenant au total 5 à 12 atomes de carbone, un groupe aryle le cas échéant substitué, comprenant 6 à 10 atomes de carbone ou un groupe aralkyle comprenant 7 à 12 atomes de carbone,
n et m représentent indépendamment l'un de l'autre, un nombre entier de 1 à 200, **en ce qu'**on utilise comme monomères un mélange d'un composé de formule (II) et un composé de formule (IV), 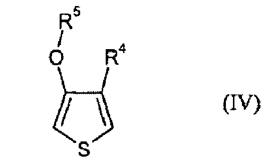 où R⁴ et R⁵ ont la signification mentionnée pour les formules générales (III) et (IIIa).

14. Composés neutres de formule générale (I) 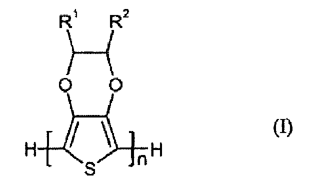 où
R¹ et R² représentent, indépendamment l'un de l'autre, à chaque fois H ou C₁ à C₉-alkyle, où, pour le cas où R¹ représente H, R² peut également représenter CH₂-O-R³, avec R³ = H ou C₁ à C₉-alkyle, cycloalkyle ou aralkyle, et
n vaut un nombre entier de 2 à 200,
**caractérisés en ce qu'**ils sont solubles dans des solvants organiques et exempts d'halogènes liés organiquement.

15. Composés selon la revendication 14, **caractérisés en ce que** R¹ et R² représentent H.

16. Copolymères neutres des formules (III) ou (IIIa), 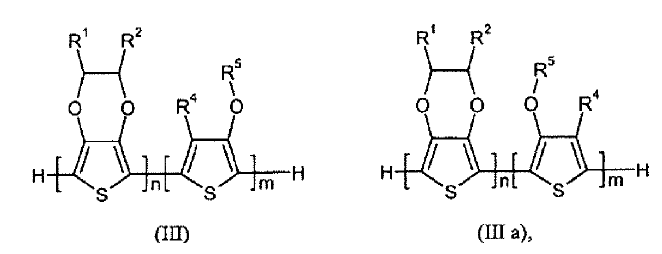 où
R¹ et R² représentent, indépendamment l'un de l'autre, à chaque fois H ou C₁ à C₉-alkyle, où, pour le cas où R¹ représente H, R² peut également représenter CH₂-O-R³, avec R³ = H ou C₁ à C₉-alkyle, cycloalkyle ou aralkyle,
R⁴ représente un groupe alkyle linéaire ou ramifié, comprenant 1 à 18 atomes de carbone, un groupe cycloalkyle le cas échéant substitué par C₁ à C₆-alkyle, comprenant au total 5 à 12 atomes de carbone, un groupe aryle le cas échéant substitué, comprenant 6 à 10 atomes de carbone ou un groupe C₁-C₁₈-alcoxy linéaire ou ramifié,
R⁵ représente un groupe alkyle linéaire ou ramifié, comprenant 1 à 18 atomes de carbone, un groupe cycloalkyle le cas échéant substitué par C₁ à C₆-alkyle, comprenant au total 5 à 12 atomes de carbone, un groupe aryle le cas échéant substitué, comprenant 6 à 10 atomes de carbone ou un groupe aralkyle comprenant 7 à 12 atomes de carbone,
n et m représentent, indépendamment l'un de l'autre, un nombre entier de 1 à 200,
**caractérisés en ce qu'**ils sont solubles dans des solvants organiques et exempts d'halogènes liés organiquement.

17. Utilisation des composés ou des copolymères neutres selon au moins l'une quelconque des revendications 14 à 16, pour la préparation de polythiophènes cationiques, **caractérisée en ce que** les composés ou copolymères neutres sont oxydés en présence d'un acide protonique.

18. Utilisation des composés ou des copolymères neutres selon au moins l'une quelconque des revendications 14 à 16, pour la préparation de couches de polythiophènes cationiques, **caractérisée en ce que** les composés ou copolymères neutres sont appliqués sur un substrat et oxydés par l'oxygène de l'air en présence d'un acide sulfonique organique.

19. Utilisation des composés ou des copolymères neutres selon au moins l'une quelconque des revendications 14 à 16 pour la préparation de pièces électriques ou électroniques, par exemple pour la préparation d'éléments d'éclairage, de photocellules ou de transistors organiques, pour l'apprêt de feuilles en matériau synthétique destinées à l'emballage de pièces électroniques et aux emballages pour salles blanches, pour l'apprêt antistatique de tubes à rayons cathodiques, pour l'apprêt antistatique de films photographiques, comme chauffage transparent, comme électrodes transparentes, comme circuit imprimés ou pour vitres pouvant être teintées électriquement.
